# EUROPÄISCHE PATENTANMELDUNG

(11) **EP 1 130 762 A2**
(43) Veröffentlichungstag der Anmeldung: **05.09.2001**
(21) Anmeldenummer: 01103148.1
(22) Anmeldetag: 10.02.2001
(51) Int. Cl.: H02P 8/22

(54) **Verfahren zum Betrieb eines Schrittmotors und Stellvorrichtung mit einem Schrittmotor**

(30) Priorität: 19.02.2000 DE 10007643
(71) Anmelder: Hella KG Hueck & Co., 59552 Lippstadt (DE)
(72) Erfinder: Krüger, Dietmar, 59558 Lippstadt (DE); Lammers, Christian, 71706 Markgröningen (DE); Kasprzok, Ralf, 33428 Harsewinkel (DE)

(57) **Zusammenfassung**

Die vorliegende Erfindung betrifft ein Verfahren zum Betrieb eines Schrittmotors, zur Betätigung eines Stellelementes, bei dem die Wicklungen des Schrittmotors zur Erzeugung von Stell- und Haltemomenten mit vorgegebenen Stromstärken bestromt werden. Um eine zuverlässige Verstellung ohne Schrittverluste bei niedrigen Temperaturen zu gewährleisten, wird vorgeschlagen, daß bei tieferer Schrittmotortemperatur die Wicklungen mit höherer Stromstärke bestromt werden, als bei höherer Schrittmotortemperatur. Eine Stellvorrichtung zur Durchführung dieses Verfahrens ist ebenfalls Gegenstand der Erfindung.

## Beschreibung

Die vorliegende Erfindung betrifft ein Verfahren zum Betrieb eines Schrittmotors zur Betätigung eines Stellelementes, bei dem die Wicklungen des Schrittmotors zur Erzeugung von Stell- und Haltemomenten mit vorgegebener Stromstärke bestromt werden. Eine Stellvorrichtung mit einem Schrittmotor, der von einer Stromversorgungseinrichtung mit vorgebbarer Stromstärke bestrombar ist, ist ebenfalls Gegenstand der Erfindung.

Stellantriebe mit Schrittmotoren sind weit verbreitet, insbesondere auch für automatisierte Stelleinrichtungen in Kraftfahrzeugen, beispielsweise zur lagegeregelten Einstellung von Scheinwerferreflektoren in Leuchtweitenregelungs- (LWR-) Systemen. In Abhängigkeit von der jeweils herrschenden Außentemperatur sind derartige Stellantriebe einschließlich Schrittmotoren und Stellmechanik entsprechend niedrigen Umgebungstemperaturen ausgesetzt. Bei Betriebstemperaturen unterhalb des Gefrierpunkts, insbesondere bei Frost mit Temperaturen von unterhalb minus 20°C nimmt das von den Schrittmotoren zur Verfügung gestellte Drehmoment drastisch ab. Erschwerend kommt hinzu, daß bei diesen Temperaturen die zu bewegenden Stellelemente, beispielsweise die Scheinwerfer eines LWR-Systems, besonders schwergängig sind.

Unter niedrigen Betriebstemperaturen reicht die Kraft des Schrittmotors deswegen oftmals nicht aus, um das Stellelement, etwa den Reflektor des Scheinwerfers, zu bewegen. Dadurch, daß der Schrittmotor infolge dessen Schritte verliert, das heißt, der Rotor des Motors dem aufgeprägten, rotierenden Magnetfeld nicht folgen kann, kommt es zu Fehlstellungen des Stellelementes. Eine Korrektur dieser Fehlpositionierung ist bei Schrittmotor-Systemen ohne zusätzliche Lagerückmeldung erst im Zuge eines Referenzlaufes möglich, wenn der Motor gegen einen definierten Anschlag gefahren wird, der vom System als definierte Ausgangspositionen gesetzt wird. Zum einen wird ein derartiger Referenzlauf jedoch aus praktischen Gründen lediglich in größeren Zeitintervallen durchgeführt, beispielsweise beim Einschalten der Zündung eines Kraftfahrzeuges oder dem Einschalten der Kraftfahrzeugscheinwerfer. Zum anderen bietet selbst der Start von einer Referenzposition aus keine Gewähr dafür, daß nicht bereits bei der Bewegung zur Sollposition Schrittverluste eintreten. Die dadurch bedingte, zumindest zeitweise Fehlstellung, beispielsweise der Scheinwerfer in einem LWR-System kann zur erheblichen Sicherheitsrisiken führen, beispielsweise durch Blendung des Gegenverkehrs.

Im Stand der Technik ist angesichts der vorgenannten Problematik bereits vorgeschlagen worden, die Kraftabnahme, das heißt die Abnahme des Antriebsdrehmoments von Schrittmotoren bei niedrigen Temperaturen durch eine Erhöhung der Antriebskraft auszugleichen. In der EP 0 737 600 A2 wurde hierzu bereits vorgeschlagen, die Schrittfrequenz in Abhängigkeit von der Scheinwerfer-Betriebstemperatur für tiefe Temperaturen zu verringern. Dadurch wird zwar die Schwergängigkeit des Stellelementes bei tieferen Temperaturen berücksichtigt und teilweise ausgeglichen. Problematisch ist jedoch nach wie vor, daß vom Schrittmotor bei tiefen Temperaturen lediglich eine geringere Stellkraft zur Verfügung gestellt wird, auch wenn die Schrittfrequenz reduziert wird. Eine Fehlpositionierung des Stellelementes, beispielsweise des Scheinwerfers, ist dadurch bei sehr niedrigen Temperaturen, beispielsweise unter minus 20°C, nach wie vor möglich. Außerdem ist dadurch eine Verringerung der Verstellgeschwindigkeit unvermeidlich.

Angesichts der vorgenannten Problematik liegt der vorliegenden Erfindung die Aufgabenstellung zugrunde, ein Verfahren zum Betrieb eines Schrittmotors sowie eine danach betreibbare Stellvorrichtung anzugeben, welche den Betrieb des Schrittmotors bei tiefen Umgebungstemperaturen verbessert.

Zur Lösung dieser Problematik schlägt das erfindungsgemäße Verfahren vor, daß bei tieferer Schrittmotortemperatur die Wicklungen mit höherer Stromstärke bestromt werden, als bei höherer Schrittmotortemperatur.

Beim erfindungsgemäßen Verfahren wird unmittelbar die Temperatur des Schrittmotors zur Optimierung der Schrittmotorbestromung bei niedrigen Temperaturen herangezogen. Die Erhöhung des Motorstroms für niedrige Motortemperaturen führt zu mehreren vorteilhaften Effekten, die sich positiv auf die Betriebseigenschaften einer Stelleinrichtung bei niedrigen Temperaturen auswirken, insbesondere zur Scheinwerfereinstellung eines LWR-Systems in einem Kraftfahrzeug bei niedrigen Außentemperaturen.

Durch die gegenüber dem normalen Betriebsstrom erhöhte, starke Bestromung werden die bestromten Motorwicklungen aufgrund ihres ohmschen Widerstands aufgeheizt. Dadurch erfährt der Schrittmotor eine Erhöhung seiner Betriebstemperatur, so daß sein Wirkungsgrad, das heißt das abgegebene Drehmoment, gegenüber einem kalten Motor erhöht wird. Neben der Krafterhöhung durch die elektrische Erwärmung des Schrittmotors führt die erfindungsgemäße Stromerhöhung außerdem zu einer unmittelbaren Erhöhung des Motordrehmoments, da die Motorkraft mit steigendem Motorstrom ebenfalls ansteigt. Diese beiden Effekte verstärken sich gegenseitig und führen zu einem besonders zuverlässigen Betriebsverhalten, und zwar selbst bei niedrigen Umgebungstemperaturen. Dies kommt insbesondere dem sicheren Betrieb von LWR-Systemen entgegen, da eine Verkehrsgefährdung durch fehlpositionierte Scheinwerfer weitgehend ausgeschlossen wird.

Üblicherweise wird in der Spezifikation für einen Schrittmotor ein Betriebsstrom angegeben, der zur Ausführung eines Schrittes an die Wicklungen angelegt wird, sowie ein niedrigerer Haltestrom, mit dem die Wicklungen beaufschlagt werden, um den Motor und das daran angeschlossene Stellelement in einer bestimmten Winkelposition zu halten. Für die erfindungsgemäße Aufheizung bzw. Kraftverstärkung des Schrittmotors kann sowohl die Stromstärke des Betriebsstroms zur Erzeugung von Stellmomenten, als auch die Stärke des Haltestroms im Ruhezustand erhöht werden. Beispielsweise kann der Haltestrom bis auf die Stärke des Betriebsstroms angehoben werden. Gegebenenfalls können die Wicklungen auch kurzfristig mit einer Stromstärke beaufschlagt werden, welche außerhalb der Nennwerte gemäß der Motorspezifikation liegt.

Die Schrittmotortemperatur wird bevorzugt mit einem am Schrittmotor angebrachten Temperatursensor gemessen. Hierfür wird ein elektronisches Temperaturmeßelement, beispielsweise ein NTC- oder PTC-Widerstand, ein Halbleitersensor oder dergleichen am oder neben dem Schrittmotor montiert. Sobald mit diesem Temperatursensor die Temperaturerhöhung des Schrittmotors aufgrund der erfindungsgemäßen Stromerhöhung festgestellt wird, wird zum normalen Motorbetrieb mit den für normale Umgebungstemperaturen vorgegebenen Betriebsströmen übergegangen.

Alternativ ist es ebenfalls möglich, daß die Stromstärke für einen vorgegebenen Zeitraum erhöht wird. Dabei wird, beispielsweise über einen integrierten Zeitgeber, ein Zeitintervall für die erfindungsgemäße Erhöhung der Motorbestromung vorgegeben, wodurch der Schrittmotor auch bei sehr niedrigen Umgebungstemperaturen eine ausreichende Betriebstemperatur bekommt.

Bei dem erfindungsgemäßen Verfahren kann vorgesehen werden, daß die Stromstärke unterhalb einer vorgegebenen Temperaturschwelle erhöht wird. Bis zu einem vorgegebenen unteren Grenzwert für die Temperatur, beispielsweise 0°C, -10°C oder -20°C, wird der Schrittmotor mit normalen Betriebsströmen gefahren. Erst unterhalb dieses Grenzwertes, wenn kältebedingte Ausfälle zu erwarten sind, wird auf die erfindungsgemäß erhöhte Bestromung umgeschaltet. Ein derartiger Betrieb ist energiesparend und schaltungstechnisch einfach umsetzbar. Andererseits wird so eine Überhitzung eines bereits betriebswarmen Motors verhindert. Alternativ ist es ebenfalls denkbar, die Stromstärke kontinuierlich der Temperatur anzupassen, was jedoch unter Umständen einen erhöhten Schaltungsaufwand mit sich bringt.

Besonders vorteilhaft ist es, daß das erfindungsgemäße Verfahren zum Betrieb einer Leuchtweiten-Einstellvorrichtung eines Kraftfahrzeuges eingesetzt wird. Bei einem derartigen LWR-System wird mit jeweils einem Schrittmotor der Neigungswinkel eines Scheinwerferreflektors in Abhängigkeit von der Position des Fahrzeugchassis zum Untergrund geregelt und eingestellt. Dank des erfindungsgemäßen Verfahrens wird insbesondere für diese Anwendung ein besonderer Sicherheitsgewinn erreicht, da eine Blendung entgegenkommender Verkehrsteilnehmer durch fehlpositionierte Scheinwerferreflektoren aufgrund von Schrittverlusten des Schrittmotors weitgehend vermieden wird.

Zur Durchführung des erfindungsgemäßen Verfahrens bei einem LWR-System wird bei vorgegebenen Randbedingungen, beispielsweise beim Einschalten der Zündung oder der Scheinwerfer, zunächst ein Referenzlauf durchgeführt, bei dem der Schrittmotor gegen einen definierten Anschlag gefahren wird. Während dessen wird mittels geeigneter Temperatursensoren die Motortemperatur erfaßt. Wird dabei eine vorgegebene Temperatur unterschritten, beispielsweise aufgrund niedriger Außentemperaturen, erfolgt bereits in dieser Ausgangsposition eine erhöhte Bestromung, so daß der Schrittmotor gleichzeitig erwärmt wird und ein höheres Stellmoment abgibt. Damit ist gewährleistet, daß der Scheinwerfer ohne Schrittverluste in die geforderte Sollposition gebracht wird, selbst wenn der Stellmechanismus aufgrund niedriger Außentemperaturen schwergängig sein sollte.

Der Schrittmotor wird durch die erfindungsgemäße Stromerhöhung selbst bei kurzfristiger Überschreitung der in der Motorspezifikation vorgegebenen Betriebskennwerte keine Schäden erleiden, da die Motortemperatur überwacht wird, so daß eine thermische Zerstörung der Isolation der Motorwindungen ausgeschlossen ist. Zudem erfolgt die kontrollierte Erhöhung des Motorstroms ohnehin vorzugsweise bei Temperaturen unterhalb von 0°C, so daß mit einer kritischen Erwärmung der Motorwicklungen nicht zu rechnen ist.

Die Umsetzung des erfindungsgemäßen Verfahrens erfolgt bei einer Stellvorrichtung mit einem Schrittmotor, der von einer Stromversorgungseinrichtung mit vorgebbarer Stromstärke bestrombar ist. Im einzelnen ist hierzu an dem Schrittmotor ein Temperatursensor zur Erfassung der Schrittmotortemperatur angebracht, welcher mit der Stromversorgungseinrichtung verbunden ist, von der bei einer tiefen Schrittmotortemperatur eine höhere Stromstärke abgebbar ist als bei einer höheren Schrittmotortemperatur. Die Stromversorgungseinrichtung wird dabei durch den elektrischen Temperatursensor angesteuert, welche in unmittelbarer Nähe des Schrittmotors untergebracht ist und dadurch eine Sollwertvorgabe für die von der Stromversorgungseinrichtung abzugebene Stromstärke in Abhängigkeit von der erfaßten Temperatur abgibt.

Besonders vorteilhaft wird eine derartige Stellvorrichtung zur Einstellung der Neigung des Kraftfahrzeugscheinwerfers in einer Leuchtweitenregelungsvorrichtung eines Kraftfahrzeugs eingesetzt. Bei einem derartigen LWR-System wird das Stellelement durch einen mit den Schrittmotor gekoppelten, in seiner Neigung verstellbaren Scheinwerfer bzw. Reflektor gebildet. Wegen der insbesondere bei Frostbedingungen sehr niedrigen Umgebungstemperaturen, unter denen Stellvorrichtungen in LWR-Systemen arbeiten, ist der Einsatz einer erfindungsgemäßen Stellvorrichtung für diese Anwendung besonders vorteilhaft.

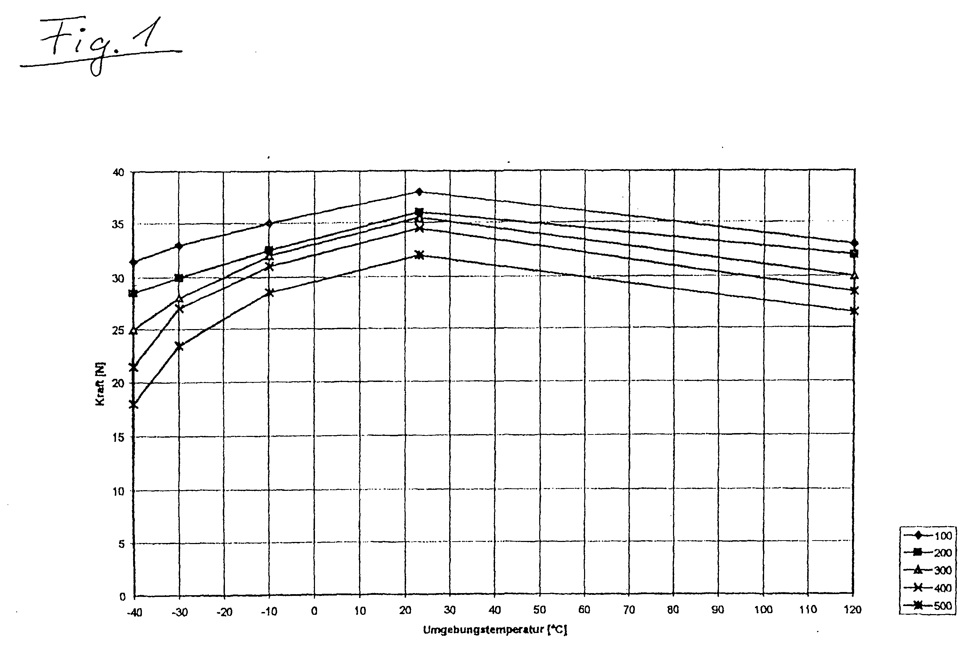

Zur Erläuterung des erfindungsgemäßen Verfahrens wird im folgenden auf das in Fig. 1 dargestellte Diagramm Bezug genommen, bei dem die von einem Schrittmotor abgegebene Kraft in Abhängigkeit von der Umgebungstemperatur für unterschiedliche Stromstärken aufgetragen ist. Die insgesamt fünf übereinanderliegenden Kurven beziehen sich auf unterschiedliche Schriftfrequenzen. Aus dem Verlauf der Kurven ist deutlich entnehmbar, daß der maximale Wirkungsgrad des Schrittmotors zwischen 20 und 30°C liegt. Zu tieferen Betriebstemperaturen hin zeigt sich ein Abfall des zur Verfügung stehenden Drehmoments, insbesondere unterhalb -10°C bzw. -30°C.

Durch eine kurzfristige starke Bestromung wird die Betriebstemperatur des Schrittmotors zum Maximum des thermischen Wirkungsgrads hin verschoben, so daß eine größere Motorkraft zur Verfügung steht. Dieser Effekt wird positiv überlagert von dem Effekt, daß mit der Erhöhung des Motorstroms ohnehin eine Erhöhung des Motordrehmoments einhergeht. Das Zusammenspiel beider Effekte führt zu einer besonders wirkungsvollen Kompensation des Drehmomentabfalls bei tieferen Temperaturen.

## Patentansprüche

1. Verfahren zum Betrieb eines Schrittmotors bei dem die Wicklungen des Schrittmotors zur Erzeugung von Stell- und Haltemomenten mit vorgegebenen Stromstärken bestromt werden, gekennzeichnet dadurch, daß bei tieferer Schrittmotortemperatur die Wicklungen mit höherer Stromstärke bestromt werden als bei höherer Schrittmotortemperatur.

2. Verfahren nach Anspruch 1, **dadurch gekennzeichnet**, daß der Betriebsstrom zur Verstellung des Schrittmotors erhöht wird.

3. Verfahren nach Anspruch 1, **dadurch gekennzeichnet**, daß der Haltestrom zum Halten der Schrittmotorposition erhöht wird.

4. Verfahren nach einem der Ansprüche 1 bis 3, **dadurch gekennzeichnet**, daß die Stromstärke oberhalb des Nennwerts gemäß der Motorspezifikation liegt.

5. Verfahren nach einem der Ansprüche 1 bis 4, **dadurch gekennzeichnet**, daß die Schrittmotortemperatur mit einem am Schrittmotor angebrachten Temperatursensor gemessen wird.

6. Verfahren nach einem der Ansprüche 1 bis 5, **dadurch gekennzeichnet**, daß die Stromstärke für einen vorgegebenen Zeitraum erhöht wird.

7. Verfahren nach einem der Ansprüche 1 bis 6, **dadurch gekennzeichnet**, daß die Stromstärke unterhalb einer vorgegebenen Temperaturschwelle erhöht wird.

8. Verfahren nach einem der Ansprüche 1 bis 7, **dadurch gekennzeichnet**, daß es zum Betrieb einer Leuchtweiten-Einstellvorrichtung eines Kraftfahrzeuges verwendet wird.

9. Stellvorrichtung mit einem Schrittmotor, der von einer Stromversorgungseinrichtung mit vorgebbarer Stromstärke bestrombar ist, **dadurch gekennzeichnet**, daß an dem Schrittmotor ein Temperatursensor zur Erfassung der Schrittmotortemperatur angebracht ist, der mit der Stromversorgungseinrichtung verbunden ist, von der bei einer tiefen Schrittmotortemperatur eine höhere Stromstärke abgebbar ist als bei einer höheren Schrittmotortemperatur.

10. Stellvorrichtung nach Anspruch 9, **dadurch gekennzeichnet**, daß sie zur Einstellung der Neigung des Kraftfahrzeugscheinwerfers in einer Leuchtweitenregelungsvorrichtung eines Kraftfahrzeugs (LWR-System) ausgebildet ist.
